(19) Europäisches Patentamt

European Patent Office

Office européen des brevets

(11) **EP 1 299 267 B1**

(12) **EUROPÄISCHE PATENTSCHRIFT**

(45) Veröffentlichungstag und Bekanntmachung des Hinweises auf die Patenterteilung:
**19.05.2004 Patentblatt 2004/21**

(51) Int Cl.⁷: **B60R 21/01**

(21) Anmeldenummer: **00954311.7**

(86) Internationale Anmeldenummer:
**PCT/DE2000/002222**

(22) Anmeldetag: **07.07.2000**

(87) Internationale Veröffentlichungsnummer:
**WO 2002/004257 (17.01.2002 Gazette 2002/03)**

(54) **INSASSENRÜCKHALTESYSTEM FÜR EIN KRAFTFAHRZEUG**

PASSENGER RESTRAINT SYSTEM FOR A MOTOR VEHICLE

SYSTEME DE RETENUE DE PASSAGER POUR VEHICULE AUTOMOBILE

(84) Benannte Vertragsstaaten:
**DE FR GB IT**

(43) Veröffentlichungstag der Anmeldung:
**09.04.2003 Patentblatt 2003/15**

(73) Patentinhaber: **SIEMENS AKTIENGESELLSCHAFT**
**80333 München (DE)**

(72) Erfinder:
- **FESER, Michael**
  **D-93092 Barbing (DE)**
- **LEIRICH, Oskar**
  **93098 Mintraching (DE)**
- **UHDE, Jochen**
  **Tampa, FL 33647 (US)**

(56) Entgegenhaltungen:
**EP-A- 0 987 151         DE-A- 19 827 557**
**US-A- 5 629 847         US-A- 5 961 562**

**Beschreibung**

Die Erfindung betrifft ein Insassenrückhaltesystem für ein Kraftfahrzeug. Aus der EP 0 987 151 A1 ist ein Rückhalte system gemäß dem oberbegriff des Anspruchs 1 bekannt.

Moderne Insassenrückhaltesysteme wie beispielsweise Gurtstraffer oder Airbags für Fahrer- und/oder Beifahrer sollen nur dann auslösen, wenn es sich beispielsweise um einen Frontal- oder Winkelaufprall handelt. Eine Auslösung sollte dagegen beispielsweise nicht erfolgen bei holprigen Straßen, elektromagnetischer Unverträglichkeit sowie aufgrund eines Fehlers innerhalb der elektronischen Schaltung. Aufgrund der jüngsten Generation von sogenannten Smart-Airbags und des immer häufigeren Einsatzes elektronischer Frontsensoren am Fahrzeug ergeben sich zudem immer kürzere Auslösezeiten für passive Rückhaltemittel.

Fehlfunktionen des Insassenrückhaltesystems werden derzeit durch einen mechanischen Beschleunigungssensor, den sogenannten Safing-Sensor, verhindert. Mechanische Safing-Sensoren (z. B. Ball in Tube, Rollamite usw.) sind nach einem anderen physikalischen Prinzip aufgebaut als elektronische Beschleunigungssensoren. Dabei können elektrische Störungen die elektronischen Sensoren wesentlich stärker beeinflussen als dies bei mechanischen Sensoren der Fall ist. Eine Airbag-Auslösung findet beispielsweise nur dann statt, wenn der elektronische Sensor eine Auslösung veranlasst und zudem der mechanische Sensor (mechanische Schalterfunktion) geschlossen wird. Airbag-Fehlauslösungen aufgrund von ungünstigen Straßenbedingungen können mittels eines mechanischen Sensors nicht in jedem Falle verhindert werden, da die mechanischen Sensoren durch die Erschütterungen geschlossen werden könnten.

Der Einsatz elektronischer Beschleunigungssensoren insbesondere in der Crash-Zone des Fahrzeugs (z. B. Front- oder Early-Crash-Sensoren) erlaubt immer kürzer werdende Auslösezeiten bei Insassenrückhaltesystemen. Hingegen erreichen bereits heute die verfügbaren mechanischen Sensoren zum Teil nicht mehr die dazu erforderliche Schließzeit. Eine weitere Erhöhung der Empfindlichkeit des gesamten Insassenrückhaltesystems durch eine Verringerung der Ansprechschwelle bei den mechanischen Sensoren erscheint aufgrund der damit verbundenen zunehmenden Häufigkeit des Schließens bei normalem Fahrbetrieb als nicht sinnvoll.

Aufgabe der Erfindung ist es daher, ein Insassenrückhaltesystem für ein Kraftfahrzeug anzugeben, bei dem trotz einer sehr geringen Auslösezeit ein besserer Schutz vor Fehlauslösungen erreicht wird.

Die Aufgabe wird durch ein Insassenrückhaltesystem gemäß Patentanspruch 1 gelöst. Ausgestaltungen und Weiterbildungen des Erfindungsgedankens sind Gegenstand von Unteransprüchen.

Vorteil der Erfindung ist es, dass überwiegend bereits im Fahrzeug vorhandene, redundante Informationen dazu verwendet werden, einen Aufprall sicher zu erkennen und von Fehlfunktionen zu unterscheiden, so dass der zusätzliche Aufwand für den Ersatz des mechanischen Sensors äußerst gering ist und abgesehen von wenigen zusätzlichen Hardware-Komponenten überwiegend durch Software realisiert werden kann.

Erzielt wird dies im einzelnen durch ein Insassenrückhaltesystem mit einem Rückhaltemittel zum Schutz von Insassen in dem Kraftfahrzeug und mit mindestens zwei räumlich getrennt voneinander angeordneten elektronischen Beschleunigungssensoren zum Erkennen eines Aufpralls (z. B. ein Frontsensor und ein zentral in der Steuereinrichtung angeordneter Sensor). Mit den Beschleunigungssensoren ist über eine Auswerteeinheit eine Steuereinrichtung zum Auslösen des Rückhaltemittels bei einem Aufprall des Fahrzeuges gekoppelt. Die Auswerteeinheit integriert die von den Beschleunigungssensoren bereitgestellten Beschleunigungssignale auf, wobei die Auswerteeinheit separat oder in die Beschleunigungssensoren mitintegriert oder bevorzugt in die Steuereinrichtung mitintegriert sein können. Eine Auslösung erfolgt nur dann, wenn die Summe der jeweils mit einem Gewichtungsfaktor bewerteten integrierten Beschleunigungssignale einen bestimmten Mindestsummenwert überschreitet.

Die Integration der Beschleunigungssignale wird gestartet wenn das Signal einen bestimmten Schwellenwert (Mindestbeschleunigung) überschreitet. An einem oder mehreren Beschleunigungssensoren gleichzeit wird von dem errechneten Integral in jedem Rechenzyklus ein konstanter Wert subtrahiert. Fällt die Beschleunigung unter diesen konstanten Wert, nimmt der Betrag des Integrals mit jedem Rechenzyklus ab. Erreicht das Integral den Betragswert, wird keine weitere Integration durchgeführt.

Des Weiteren ist bevorzugt ein Beschleunigungssensor in die Steuereinrichtung integriert und/oder ein Beschleunigungssensor ausgelagert. Der ausgelagerte Beschleunigungssensor ist dabei bevorzugt im Frontbereiches des Fahrzeuges angeordnet. Dabei kann bei dem ausgelagerten Beschleunigungssensor Vorverarbeitungseinrichtung (u.U. ein Controller) vorgesehen werden, der eine Signalvorverarbeitung durchführt. Die Signalvorverarbeitung kann beispielsweise in einer Filterung und Diskretisierung des Beschleunigungssignals bestehen.

Vorzugsweise wird in der Steuereinheit auch eine Plausibilitätsprüfung durchgeführt. Bei der Plausibilitätsprüfung wird beispielsweise eine Auswertung der Beschleunigungssignale dahingehend durchgeführt, dass Beschleunigungssignale mit extremen Signalsprüngen oder unüblichen Signalverläufen ausgeblendet werden.

Neben der Realisierung der Safing-Funktion mit elektronischen Mitteln werden bevorzugt daneben auch die üblichen Methoden zur Aufprallerkennung angewandt, d. h. eine direkte Auswertung der einzelnen Beschleunigungsignale vorgenommen.

Die Erfindung wird nachfolgend anhand des in den Figuren der Zeichnung dargestellten Ausführungsbeispiels näher erläutert. Es zeigt:

Figur 1 eine allgemeine Ausführungsform eines erfindungsgemäßen Insassenrückhaltesystems,

Figur 2 einen Teil der Steuereinrichtung bei einer erfindungsgemäßen Insassenrückhaltesystems und

Figur 3 den Verlauf der Safing-Funktion für zwei verschiedene Betriebsbedingungen.

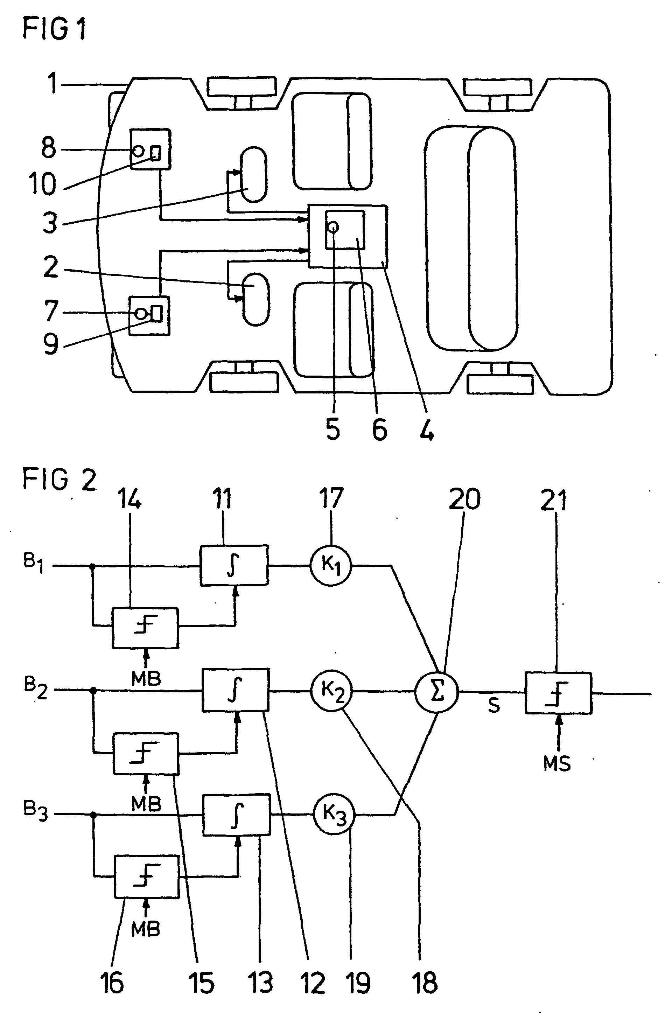

Gemäß dem in Figur 1 gezeigten Ausführungsbeispiel ist ein Fahrzeug 1 mit einem Fahrerairbag 2 und einem Beifahrerairbag 3 ausgestattet. Von dem Fahrzeug 1 ist der besseren Übersichtlichkeit halber in der Zeichnung nur die Plattform dargestellt. An zentraler Stelle, also im wesentlichen in der Mitte des Fahrzeuges 1 befindet sich eine zentrale Steuereinrichtung (ECU) 4, die zur Steuerung von Fahrer- und Beifahrerairbag 2, 3 mit diesen verbunden ist. Die Steuereinrichtung 4 enthält einen elektronischen Beschleunigungssensor 5, dem ein Mikrocontroller 6 zur Signalaufbereitung und Plausibilitätsprüfung nachgeschaltet ist. Die Steuereinrichtung enthält darüber hinaus nicht näher dargestellte Schaltungsteile zur Signalaufbereitung und zur Erzeugung der Auslösesignale für den Fahrerairbag 2 und den Beifahrerairbag 3.

An die Steuereinrichtung 4 sind zudem zwei weitere, ausgelagerte elektronische Beschleunigungssensoren 7 und 8 mit jeweils einer nachgeschalteten Vorverarbeitungseinrichtung 9 bzw. 10 zum Filtern und zur Analog-Digital-Umsetzung angeschlossen. Die Beschleunigungssensoren 7 und 8 sind dabei im Frontbereich des Fahrzeuges zu den beiden frontseitigen Ekken des Fahrzeugs hin angeordnet. Beim Ausführungsbeispiel sind die beiden Beschleunigungssensoren 7 und 8 direkt mit der Steuereinrichtung 4 verbunden. Die Auswertung der drei Beschleunigungssignale von den ausgelagerten Beschleunigungssensoren 7 , 8 und dem zentralen Beschleunigungssensor 5 erfolgt dabei durch den Mikrokontroller 6 der Steuereinrichtung 4. Diese führt auch eine Plausibilitätsprüfung durch derart, dass sie beispielsweise Beschleunigungssignale mit extremen Signalsprüngen oder unüblichen Signalverläufen ausblendet.

Neben der Integration führt die Steuereinrichtung (Mikrocontroller) insbesondere auch eine Gewichtung der integrierten Beschleunigungssignale, die anschließende Aufsummierung und den Vergleich mit einem vorgegebenen Mindestsummenwert durch. Ein Aufprall liegt demnach vor, wenn bei beispielsweise drei Beschleunigungssensoren folgender Zusammenhang gilt:

$$S = K_1 \int B_1 + K_2 \int B_2 + K_3 \int B_3 > MS$$

Dabei steht S für Summenwert, MS für Mindestsummenwert, $B_1$, $B_2$, und $B_3$ für Beschleunigungssignale der Beschleunigungssensoren 5, 7, 8 und $K_1$, $K_2$, und $K_3$ für die zugehörigen Gewichtungsfaktoren. Die Gewichtungsfaktoren hängen dabei insbesondere vom Fahrzeugaufbau (z. B. Steifigkeit der Karosserie) und der Lage der einzelnen Beschleunigungssensoren ab. Bei Verwendung von weniger oder mehr Beschleunigungssensoren ist der Zusammenhang entsprechend anzupassen.

Außer der Realisierung der Safing-Funktion werden in der Steuereinrichtung daneben auch die üblichen Methoden zur Aufprallerkennung angewandt, d. h. eine direkte Auswertung der einzelnen Beschleunigungssignale vorgenommen.

Figur 2 zeigt eine Ausführungsform einer Anordnung zum Weiterverarbeiten der Beschleunigungssignale $B_1$, $B_2$ und $B_3$ in der Steuereinrichtung 4. Die gezeigte Anordnung kann ausschließlich in Hardware, ausschließlich in Software oder teils in Hardware und teils in Software realisiert werden. Soweit die gezeigte Anordnung zumindest teilweise in Software realisiert ist, kann diese in dem zentralen Mikrocontroller oder in einem separaten Mikrocontroller implementiert werden. Bei Verwendung eines separaten Mikrocontrollers kann dieser mit dem zentralen Mikrocontroller kommunizieren. Eine gegenseitige Überprüfung der Beschleunigungssignale ist so möglich.

Die Signale $B_1$, $B_2$, und $B_3$ werden jeweils einem Integrator 11, 12, 13 zugeführt, der durch jeweils einen mit einem der Beschleunigungssignale $B_1$, $B_2$, und $B_3$ beaufschlagten Komparator 14, 15 oder 16 gesteuert wird. Die Komparatoren 14, 15 und 16 aktivieren die zugehörigen Integratoren 11, 12 und 13 dann, wenn die jeweiligen Beschleunigungssignale $B_1$, $B_2$, und $B_3$ einen einer Mindestbeschleunigung MB entsprechenden Wert übersteigt. Den Integratoren 11, 12 und 13 sind Bewertungsglieder 17, 18 und 19 nachgeschaltet, um die gewünschte Gewichtung der einzelnen integrierten Beschleunigungssignale $B_1$, $B_2$, und $B_3$ vorzunehmen. Die gewichteten integrierten Beschleunigungssignale $B_1$, $B_2$, und $B_3$ werden dann mittels eines Summierers 20 aufsummiert, dessen Ausgangssignal (Summensignal S) anschließend anhand eines Komparators 21 mit dem Mindestsummenwert MS verglichen wird. Am Ausgang des Komparators 21 steht dann ein Signal bereit, das anstelle eines mechanischen Safing-Sensors verwendet werden kann.

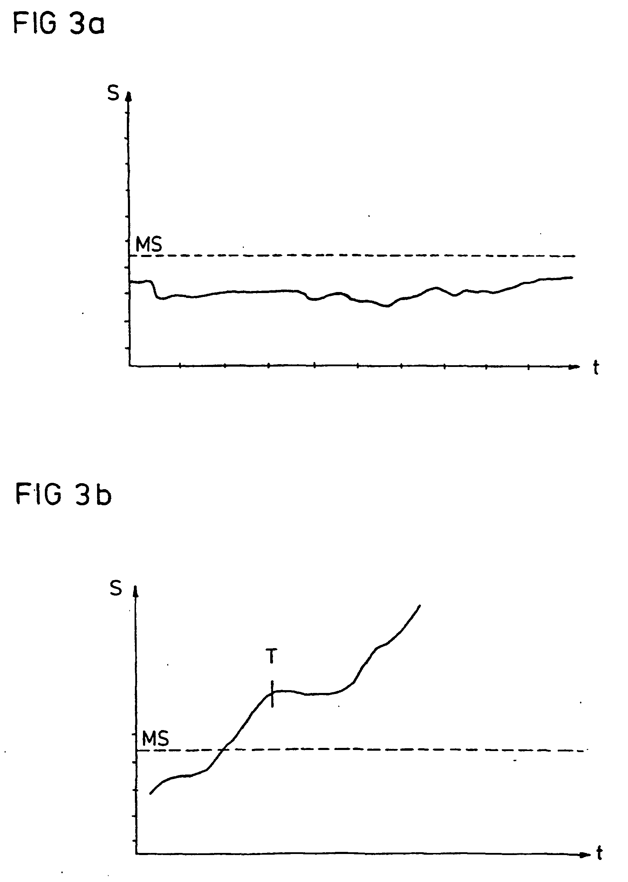

In Figur 3 ist für zwei besondere Betriebsfälle der Verlauf einzelner Funktionen als Integral der Beschleunigung über der Zeit t dargestellt, wobei ein Mindestsummenwert MS definiert ist. Die Kurve a gibt dabei die Fahrt bei schlechten Straßenverhältnissen bzw. einer Off-Road-Fahrt wieder, während die Kurve b den Aufprall des Fahrzeuges auf ein Hindernis zeigt. Bei den schlechten Straßenverhältnissen (Kurve a) bleibt das Integral stets dem Mindestsummenwert MS und weist keine herausragenden Steigungen auf. Im Falle des Aufpralls wird zu einem bestimmten Zeitpunkt der Mindestsummenwert MS durch den Summenwert S überschritten.

Bei einem erfindungsgemäßen Insassenrückhaltesystem werden also ein oder mehrere ausgelagerte elektronische Beschleunigungssensoren (elektronische Crash-Sensoren) eingesetzt. Zwei oder mehrere der Beschleunigungssensoren können dabei die Funktion des bisherigen mechanischen Beschleunigungssensors (Safing-Sensor) übernehmen, wobei nicht nur ein Ersatz für den bisherigen mechanischen Beschleunigungssensor bereitgestellt wird, sondern auch die Systemfunktion insbesondere im Hinblick auf die Reaktionszeit deutlich verbessert wird. Bedingt durch die räumliche Trennung mindestens zweier elektronischer Beschleunigungssensoren, wirken sich elektrische Störungen in der Regel nur auf einen von beiden Beschleunigungssensoren aus. Mittels einer entsprechenden logischen Verknüpfung von Minimalschwellen (Mindestsummenwert, Mindestbeschleunigung für Integration), die gleichzeitig oder kurzzeitig gegeneinander versetzt von mindesten zwei Beschleunigungssensoren überschritten werden müssen, wird eine Airbagauslösung von Fahrerairbag und/oder Beifahrerairbag nur bei einem Frontalaufprall, einem Winkelaufprall, einem Offset-Crash etc. stattfinden.

Die Funktionalität der elektronischen Safing-Funktion unter Berücksichtigung verschiedener Sensorpositionen (z. B. zentrale Steuereinrichtung im Fahrzeuginneren und mindestens ein ausgelagerter Beschleunigungssensor im Frontbereich des Fahrzeuges) ist zum einen im Mikrocontroller der zentralen Steuereinrichtung integrierbar. Zum anderen bietet sich auch die Integration in einen zusätzlichen redundanten Mikrocontroller oder einen kundenspezifischen integrierten Schaltkreis (ASIC) an, welcher die Auslösung durch Ansteuerung der entsprechenden Eingänge (die Nebeneingänge) der Zündkreisschaltungen freigeben muss, weitere Vorteile. Auf diese Weise kann ein Fehlverhalten der zentralen Steuereinrichtung in keinem Fall zu einer ungewollten Auslösung eines Rückhaltemittels führen.

Verfügen die ausgelagerten Beschleunigungssensoren über einen eigenen Mikrocontroller, so können die zur Plausibilitätsprüfung erforderlichen Berechnungen bereits dort durchgeführt werden und der Status der Safing-Funktion mit Hilfe einer entsprechenden Kommunikationsschnittstelle an die zentrale Steuereinheit übertragen werden. Die Auswertung des Protokolls in der zentralen Steuereinrichtung kann unabhängig vom Mikrocontroller beispielsweise in einem kundenspezifischen integrierten Schaltkreis (ASIC) erfolgen, wodurch der zum Mikrocontroller der zentralen Steuereinrichtung redundante Zündpfad zum Airbag erhalten bleibt.

Demnach hat ein erfindungsgemäßes Insassenrückhaltesystem einen erheblichen Kostenvorteil, da die mechanischen Beschleunigungssensoren entfallen können und beispielsweise durch kostengünstigere integrierte Schaltkreise ersetzt werden können.

Im Gegensatz zu den mechanischen Beschleunigungssensoren ist diese Realisierung der Safing-Funktionalität zu jedem Zeitpunkt vollständig und automatisiert testbar. Mechanische Sensoren können dagegen ohne äußere Einwirkungen auf die zentrale Steuereinrichtung nicht auf ihre Funktionsfähigkeit hin überprüft werden.

Darüber hinaus ist der Platzbedarf bei einem erfindungsgemäßen Insassenrückhaltesystem wesentlich geringer, da nunmehr die verhältnismäßig großen mechanischen Beschleunigungssensoren entfallen. Die Bewegung der freien Masse der mechanischen Beschleunigungssensoren und deren hartes Auftreffen an den Anschlägen kann darüber hinaus das Signal des elektronischen Beschleunigungssensors beeinflussen und verfälschen. Dieses in der Vergangenheit häufig auftretende Problem kann bei den erfindungsgemäßen Insassenrückhaltesystemen durch den Wegfall des mechanischen Beschleunigungssensors von vornherein vermieden werden.

**Patentansprüche**

1. Insassenrückhaltesystem für ein Kraftfahrzeug (1) mit
   einem Rückhaltemittel (2, 3) zum Schutz von Insassen in dem Kraftfahrzeug (1),
   mindestens zwei räumlich getrennt voneinander angeordneten elektronischen Beschleunigungssensoren (5, 7, 8) zum Erkennen eines Aufpralls,
   einer den Beschleunigungssensoren nachfolgenden Auswerteeinheit (11, 12, 13) zur Integration der von den Beschleunigungssensoren (5, 7, 8) jeweils bereitgestellten Beschleunigungssignale ($B_1$, $B_2$, $B_3$) oder davon abgeleiteten Signalen über die Zeit (t),
   einer mit der Auswerteeinheit (11, 12, 13) und/oder Beschleunigungssensoren (5, 7, 8) gekoppelten Steuereinrichtung (4) zum Auslösen des Rückhaltemittels (2, 3) bei einem Aufprall des Fahrzeuges (1), **dadurch gekennzeichnet, dass**
   eine Auslösung nur dann erfolgt, wenn die Summe (S) der jeweils mit einem Gewichtungsfaktor ($K_1$, $K_2$, $K_3$) bewerteten integrierten Beschleunigungssignale ($B_1$, $B_2$, $B_3$) einen bestimmten Mindestsummenwert (MS) oder jedes einzelne integrierte Beschleunigungssignal ($B_1$, $B_2$, $B_3$) oder davon abgeleitete Signal eine jeweilige Schwelle überschreitet.

2. Insassenrückhaltesystem nach Anspruch 1, bei dem die Auswerteeinheit (11, 12, 13) in der Steuereinrichtung (4) angeordnet sind.

3. Insassenrückhaltesystem nach Anspruch 1 oder 2, bei dem eine Integration der Beschleunigungssignale ($B_1$, $B_2$, $B_3$) nur oberhalb einer Mindestbeschleunigung (MB) erfolgt.

4. Insassenrückhaltesystem nach einem der vorherigen Ansprüche, bei dem einer (5) der Beschleunigungssensoren (5, 7, 8) in die Steuereinrichtung (4) integriert ist.

5. Insassenrückhaltesystem nach einem der vorherigen Ansprüche, bei dem ein Beschleunigungssensor (7, 8) ausgelagert ist.

6. Insassenrückhaltesystem nach Anspruch 5, bei dem der ausgelagerte Beschleunigungssensor (7, 8) Mittel (9, 10) zur Signalvorverarbeitung aufweist.

7. Insassenrückhaltesystem nach einem der vorherigen Ansprüche, bei dem die Steuereinheit (4) eine Plausibilitätsprüfung durchführt.

8. Insassenrückhaltesystem nach einem der vorherigen Ansprüche, bei dem die Steuereinheit (4) direkt mit den Beschleunigungssensoren (5, 7, 8) verbunden ist und zusätzlich die von den Beschleunigungssensoren (5, 7, 8) bereitgestellten Beschleunigungssignale ($B_1$, $B_2$, $B_3$) direkt auswertet.

**Claims**

1. Occupant restraint system for a motor vehicle (1) with
a restraining means (2, 3) for protecting occupants in the motor vehicle (1),
at least two electronic acceleration sensors (5, 7, 8) that are arranged separately from each other for detecting a collision,
an evaluation unit (11, 12, 13), downstream of the acceleration sensors, for integrating over time (t) the acceleration signals ($B_1$, $B_2$, $B_3$) respectively provided by the acceleration sensors (5, 7, 8) or signals derived therefrom,
a control device (4), coupled to the evaluation unit (11, 12, 13) and/or acceleration sensors (5, 7, 8), for triggering the restraining means (2, 3) in the event of a collision of the vehicle (1), **characterized in that**
triggering only takes place when the sum (S) of the integrated acceleration signals ($B_1$, $B_2$, $B_3$) respectively weighted with a weighting coefficient ($K_1$, $K_2$, $K_3$) exceeds a defined minimum sum (MS) or each individual integrated acceleration signal ($B_1$, $B_2$, $B_3$) or signal derived therefrom exceeds a respective threshold.

2. Occupant restraint system according to Claim 1, in which the evaluation unit (11, 12, 13) is arranged in the control device (4).

3. Occupant restraint system according to Claim 1 or 2, in which integration of the acceleration signals ($B_1$, $B_2$, $B_3$) takes place only above a minimum acceleration (MB).

4. Occupant restraint system according to one of the preceding claims, in which one (5) of the acceleration sensors (5, 7, 8) is integrated into the control device (4).

5. Occupant restraint system according to one of the preceding claims, in which an acceleration sensor (7, 8) is remotely located.

6. Occupant restraint system according to Claim 5, in which the remotely located acceleration sensor (7, 8) has means (9, 10) for signal preprocessing.

7. Occupant restraint system according to one of the preceding claims, in which the control unit (4) carries out a plausibility check.

8. Occupant restraint system according to one of the preceding claims, in which the control unit (4) is connected directly to the acceleration sensors (5, 7, 8) and, in addition, directly evaluates the acceleration signals ($B_1$, $B_2$, $B_3$) provided by the acceleration sensors (5, 7, 8).

**Revendications**

1. Système de retenue d'occupants pour un véhicule (1) comprenant
un moyen de retenue (2, 3) pour la protection d'occupants situés dans le véhicule (1), au moins deux capteurs d'accélérations électroniques (5, 7, 8) destinés à la détection d'une collision, disposés séparément l'un de l'autre dans l'espace,
une unité d'analyse (11, 12, 13) en aval des capteurs d'accélération destinée à l'intégration dans le temps (t) des signaux d'accélération (B1, B2, B3) élaborés respectivement par les capteurs d'accélération (5, 7, 8), ou de signaux qui en sont dérivés,
un dispositif de commande (4) couplé à l'unité d'analyse (11, 12, 13) et/ou aux capteurs d'accélération (5, 7, 8), destiné à déclencher le moyen de retenue (2, 3) dans le cas d'une collision du véhicule (1), **caractérisé en ce qu'**
un déclenchement ne se produit que si la somme (S) des signaux d'accélération (B1, B2, B3) intégrés et pondérés chacun par un facteur de pondération (K1, K2, K3) devient supérieure à une certaine valeur somme minimale (MS) ou chaque signal d'accélération (B1, B2, B3) intégré, ou un signal qui en est dérivé devient supérieur à un seuil correspondant.

2. Système de retenue d'occupants selon la revendication 1,
dans lequel l'unité d'analyse (11, 12, 13) est disposée dans le dispositif de commande (4).

3. Système de retenue d'occupants selon la revendication 1 ou 2,
dans lequel une intégration des signaux d'accélération (B1, B2, B3) ne se produit qu'au-dessus d'une accélération minimale (MB).

4. Système de retenue d'occupants selon une des revendications précédentes, dans lequel un (5) des capteurs d'accélération (5, 7, 8) est intégré dans le dispositif de commande (4).

5. Système de retenue d'occupants selon une des revendications précédentes, dans lequel un capteur d'accélération (7, 8) est déplacé.

6. Système de retenue d'occupants selon la revendication 5, dans lequel le capteur d'accélération déplacé (7, 8) présente des moyens (9, 10) pour le traitement des signaux.

7. Système de retenue d'occupants selon une des revendications précédentes, dans lequel l'unité de commande (4) effectue un contrôle de plausibilité.

8. Système de retenue d'occupants selon une des revendications précédentes, dans lequel l'unité de commande (4) est reliée directement aux capteurs d'accélération (5, 7, 8) et, en supplément, analyse directement les signaux d'accélération (B1, B2, B3) élaborés par les capteurs d'accélération (5, 7, 8).

## FIG 1

## FIG 2

FIG 3a

FIG 3b